# EUROPÄISCHE PATENTSCHRIFT

(11) **EP 3 507 892 B1**
(45) Veröffentlichungstag und Bekanntmachung des Hinweises auf die Patenterteilung: **13.05.2020**
(21) Anmeldenummer: 17761269.4
(22) Anmeldetag: 04.09.2017
(51) Int. Cl.: H02K 15/06

(54) **MONTAGEVORRICHTUNG ZUM GLEICHZEITIGEN EINFÜHREN VON KUPFERSTÄBEN IN EINE ELEKTRISCHE MASCHINE UND VERFAHREN**
ASSEMBLY DEVICE FOR SIMULTANEOUSLY INSERTING COPPER BARS INTO AN ELECTRIC MACHINE AND METHOD
DISPOSITIF DE MONTAGE POUR INTRODUIRE SIMULTANÉMENT DES BARRES DE CUIVRE DANS UNE MACHINE ÉLECTRIQUE ET PROCÉDÉ ASSOCIÉ

(30) Priorität: 05.09.2016 DE 102016216766
(43) Veröffentlichungstag der Anmeldung: 10.07.2019
(73) Patentinhaber: ThyssenKrupp System Engineering GmbH, 74076 Heilbronn (DE); thyssenkrupp AG, 45143 Essen (DE)
(72) Erfinder: WALTER, Andreas, 28790 Schwanewede (DE)
(74) Vertreter: thyssenkrupp Intellectual Property GmbH
(86) Internationale Anmeldenummer: PCT/EP2017/072110
(87) Internationale Veröffentlichungsnummer: WO 2018/042035

(56) Entgegenhaltungen:
- EP-A2- 2 309 625
- WO-A2-2015/000639
- DE-A1- 3 238 623
- DE-A1- 10 309 097
- GB-A- 2 451 338

## Beschreibung

Die Erfindung betrifft eine Montagevorrichtung zum gleichzeitigen Einführen in einer Axialrichtung A einer Mehrzahl an Kupferstäben in Aufnahmenuten eines Rotorelements und/oder eines Statorelements einer elektrischen Maschine.

Bei der Herstellung von elektrischen Maschinen, beispielsweise Elektromotoren oder Generatoren, geht es darum, den Montageprozess zu vereinfachen und gleichzeitig die Qualitätsparameter während des Montageprozesses zu verbessern. Hierbei ist zwischen in Wicklungs-Technologie hergestellten oder in Hair-Pin-Technologie hergestellten Statorelementen bzw. Rotorelementen zu unterscheiden. In jüngster Zeit werden verstärkt Anstrengungen unternommen die Hair-Pin-Technologie von einer überwiegend händischen oder auch halbautomatischen Fertigung hin zu einer weitestgehend automatisierten Fertigung zu entwickeln. Aufgrund der hohen Anforderungen an die Positionsgenauigkeit der Bauteile aufgrund der geringen Bauteiltoleranzen führt eine händisch bzw. halbautomatische Fertigung zu hohen Taktzeiten und mit einer gewissen Wahrscheinlichkeit zu Beschädigungen der Bauteile, was eine hohe Ausschussrate zur Folge hat. Rotorelemente in Hair-Pin-Technologie herzustellen ist bereits seit geraumer Zeit bekannt, wie dies beispielsweise die US 1 555 931 beschreibt. Weiterhin ist in der US 1 661 344 eine Montagevorrichtung beschrieben, um Rotorelemente in Hair-Pin-Technologie herzustellen, wobei hiermit höchstens eine halbautomatische Montage durchgeführt werden kann. EP 2 309 625 offenbart eine Vorrichtung, die den Operatoren hilft, Statorstäbe nacheinander in Nuten einzuführen.

Für eine einen automatischen Prozess erlaubende Montagevorrichtung kann festgehalten werden, dass es vorteilhaft ist so viel Kupferstäbe wie möglich gleichzeitig, das heißt mit einem Arbeitsschritt, in die Aufnahmenuten eines Rotorelements und/oder eines Statorelements einzuführen. Zumindest sollte es möglich sein, die für eine der Stromphasen vorgesehenen Kupferstäbe gleichzeitig einzuführen. Eine reduzierte Taktzeit ist nur dann gewährleistet, wenn auch das Bestücken der Montagevorrichtung mit den Kupferstäben in einfacher und zeitsparender Weise ermöglicht wird. Weiterhin ist infolge der engen Spaltmaße zwischen Kupferstab und Aufnahmenuten bei der Bestückung der Montagevorrichtung mit den Kupferstäben auf eine exakt definierte Positionierung der Kupferstäbe in der Montagevorrichtung zu achten. Schließlich gilt es zu berücksichtigen, dass die Kupferstäbe infolge ihrer Länge seitlich geführt in die Aufnahmenuten eingeführt werden.

Ausgehend hiervon besteht die Aufgabe der vorliegenden Erfindung darin, eine Montagevorrichtung für den genannten Zweck bereitzustellen, die den oben beschriebenen Anforderungen zumindest in Teilen Rechnung trägt.

Die Aufgabe wird gelöst durch eine Montagevorrichtung zum gleichzeitigen Einführen in einer Axialrichtung A einer Mehrzahl an Kupferstäben in Aufnahmenuten eines Rotorelements und/oder eines Statorelements einer elektrischen Maschine, umfassend
ein Bauteilaufnahmeelement zur Aufnahme des Rotorelements und/oder des Statorelements,
eine Ausrichteinheit zur Aufnahme der in das Rotorelement und/oder das Statorelement einzuführenden Kupferstäbe und zum Ausrichten der einzuführenden Kupferstäbe bezüglich des Rotorelements und/oder des Statorelements und zwei in der Axialrichtung A verfahrbare Schieberelemente, über die die Kupferstäbe an entgegengesetzten axialen Enden kontaktierbar sind, um die Kupferstäbe gleichzeitig über die an den entgegengesetzten axiale Enden kontaktierenden Schieberelemente von der Ausrichteinheit in die Aufnahmenuten des Rotorelements und/oder des Statorelements einzuführen.

Bevorzugt handelt es sich bei Axialrichtung A um eine Vertikalrichtung, so dass die Ausrichteinheit vertikal oberhalb des Bauteilaufnahmeelements angeordnet ist. Insofern erfolgt das Einführen der Kupferstäbe in einer vertikaler Richtung von der Ausrichteinheit nach unten in die Bauteilaufnahme. Ein Bestücken der Ausrichteinheit mit Kupferstäben erfolgt wiederum von vertikal oberhalb der Ausrichteinheit in diese. Mit der erfindungsgemäßen Montagevorrichtung ist es möglich, das eine der beiden Schieberelemente vertikal nach oben in eine Kontaktierungsposition zu verfahren, in der das Schieberelement die von oben in die Ausrichteinheit bestückten Kupferstäbe in dieser hält, beziehungsweise gegen ein Durchfallen in Richtung des Bauteilaufnahmeelements sichert. Mit dem zweiten, dem oberen, Schieberelement ist es in vorteilhafter Weise möglich die in der Ausrichteinheit bestückten Kupferstäbe zeitgleich in das Rotorelement und/oder das Statorelement einzuführen, das von der Bauteilaufnahme gehalten ist. Schließlich ist erfindungsgemäß vorgesehen, dass die Ausrichteinheit die in ihr bestückten Kupferstäbe alle bezüglich einer exakt definierten Position ausrichtet.

Eine vorteilhafte Ausgestaltung der Erfindung sieht vor, dass die Ausrichteinheit eine Mehrzahl Aufnahmekanäle aufweist, zur jeweiligen Aufnahme von in die Aufnahmenuten des Rotorelements und/oder des Statorelements einzuführenden Kupferstäben. Aufnahmekanäle bieten den Vorteil, dass hierdurch bereits eine weitgehend genaue Vorpositionierung der in der Ausrichteinheit bestückten Kupferstäbe erzielt werden kann. Denkbar wäre allerdings auch, dass die Halte- und Vorpositionierfunktion durch Halteelemente oder Greifelemente der Ausrichteinheit übernommen wird.

Eine vorteilhafte Ausgestaltung der Erfindung sieht vor, dass das Bauteilaufnahmeelement schwimmend gelagert ist. Hier ist es in vorteilhafter Weise möglich, dass sich die Montagevorrichtung gegenüber dem in dem Bauteilaufnahmeelement aufgenommenen Rotorelemente und/oder Statorelement ausrichtet und eine fluchtende Anordnung zueinander einnimmt.

Eine vorteilhafte Ausgestaltung der Erfindung sieht vor, dass die Ausrichteinheit zumindest zwei in jeweiligen Zustellpositionen auf die Kupferstäbe radial bezüglich der Axialrichtung A wirkende Andrückeinheiten aufweist. Durch die Andrückeinheiten ist sichergestellt, dass alle Kupferstäbe zum einen in die gleiche Anfangsposition gebracht werden können und zu anderen die gleiche Anfangsposition mit einfachen Mittel konstruktiv geändert und/oder angepasst werden kann. Eine vorteilhafte Ausgestaltung der Erfindung sieht vor, dass die zwei Andrückeinheiten in einem axialen Abstand a zueinander angeordnet sind. Hierdurch ergibt sich eine besonders gute Positionierbarkeit der Kupferstäbe bezüglich der Ausrichteinheit.

Eine vorteilhafte Ausgestaltung der Erfindung sieht vor, dass die Ausrichteinheit eine der Anzahl der Andrückeinheiten entsprechende Anzahl an Ausrichtringen aufweist, gegen die die Andrückeinheiten in ihrer jeweiligen Zustellposition die Kupferstäbe radial bezüglich der Axialrichtung A beaufschlagen. Die Ausrichtringe sind bevorzugt als innere Anschläge für die Kupferstäbe vorgesehen. Hierüber sind insbesondere diese zwei Bauteile für eine besonders präzise und toleranzgenaue Fertigung vorgesehen.

Eine vorteilhafte Ausgestaltung der Erfindung sieht vor, dass die Ausrichtringe eine sich entgegen einer Einführrichtung der Kupferstäbe erweiternde Anfasung ausbilden. Diese Anfasung begünstigt ein Einführen der Kupferstäbe in die Ausrichteinheit. Nachdem die Kupferstäbe die Anfasung passiert haben, erfolgt eine Vorzentrierung in den Aufnahmekanälen.

Eine vorteilhafte Ausgestaltung der Erfindung sieht vor, dass die Andrückeinheiten jeweils über federkraftbeaufschlagte Stößelelemente die Kupferstäbe beaufschlagen. Eine definierte Federkraft verhindert ein Verklemmen der Kupferstäbe während des Einführens in das Rotorelement und/oder das Statorelement. Weiterhin dient die Federbeaufschlagung dazu, die Toleranzen der Andrückeinheiten und der Kupferstäbe auszugleichen. Die Stößelelemente dienen dazu, während des Einführens die Kupferstäbe gegen die Ausrichtringe radial in Richtung der Axialachse A zu beaufschlagen, so dass die Kupferstäbe eine exakte Montageposition einnehmen.

Eine vorteilhafte Ausgestaltung der Erfindung sieht vor, dass die Ausrichteinheit an axialen Endbereichen eine der Anzahl der Kupferstäbe entsprechende Anzahl Führungselemente aufweist, wobei die Führungselemente Durchbrüche zum Einführen der Kupferstäbe in die Ausrichteinheit aufweisen. Die Führungselemente ermöglichen ein leichtes Einführen in die Ausrichteinheit. Um dieses Einführen weiter zu erleichtern, bilden Randbereiche der Durchbrüche sich entgegen einer Einführrichtung der Kupferstäbe erweiternde Anfasungen aus. Diese Anfasungen können auch als Einlauffasen bezeichnet werden. Insbesondere ist bevorzugt, dass die Führungselemente in jedem axialen Endbereich zu jeweils einem Ringelement verbunden sind.

Eine vorteilhafte Ausgestaltung der Erfindung sieht vor, dass die Schieberelemente eine der Anzahl der Kupferstäbe entsprechende Anzahl in Axialrichtung A ausgerichtete Druckstäbe aufweisen und die entgegengesetzten Enden der Kupferstäbe über die Druckstäbe kontaktierbar sind. Dadurch, dass jedem Kupferstab ein Druckstab der Schieberelemente zugeordnet ist, kann jeder Kupferstab einzeln und unabhängig von den anderen Kupferstäben während des Einführens mit einer Kraft beaufschlagt und kontrolliert werden. Insbesondere kann hierbei vorgesehen sein, dass die Druckstäbe eines der Schieberelemente in Axialrichtung A entgegen einer Federbeaufschlagung verschiebbar sind. Hierdurch können die Toleranzen der Kupferstäbe ausgeglichen werden. Bevorzugt handelt es sich bei diesem Schieberelement um das untere Schieberelement. Die Aufgabe wird ferner gelöst durch ein Verfahren zum gleichzeitigen Einführen in einer Axialrichtung A einer Mehrzahl von Kupferstäben in Aufnahmenute eines Rotorelements und/oder eines Statorelements einer elektrischen Maschine unter Anwendung einer zuvor beschriebenen Montagevorrichtung, mit den Schritten:
- Bereitstellen einer Mehrzahl an Kupferstäben,
- Verfahren des zweiten der zwei Schieberelemente in eine Kontaktierungsposition, in der das erste Schieberelement durch zumindest einen Teil der Aufnahmenute bis in einen axialen Endbereich der Ausrichteinheit reichend hindurchgeführt ist,
- Bestücken der Ausrichteinheit mit den Kupferstäben,
- Ausrichten der Kupferstäbe in der Ausrichteinheit auf einen gemeinsamen Radius bezogen auf die Axialrichtung A,
- Verfahren des ersten Schieberelements in eine Kontaktierungsposition, in der das erste Schieberelement die von dem zweiten Schieberelement abgewandten jeweiligen axialen Enden der Kupferstäbe kontaktiert,
- synchrones und gleichgerichtetes Verfahren des ersten und des zweiten Schieberelements in einer von der Ausrichteinheit zu dem Bauteilaufnahmeelement gerichteten Verschieberichtung V.

Die Erfindung wird nachfolgend mit weiteren Merkmalen, Einzelheiten und Vorteilen anhand der beigefügten Figuren erläutert. Die Figuren illustrieren dabei lediglich beispielhafte Ausführungsformen der Erfindung. Hierin zeigen
- Figur 1: eine erfindungsgemäße Montagevorrichtung;
- Figur 2: ein Detail einer Ausrichteinheit der Montagevorrichtung gemäß Figur 1;
- Figuren 3a, 3b: ein Detail einer Andrückeinheit der Montagevorrichtung gemäß Figur 1 und
- Figuren 4a, 4b: eine weiteres Detail der einer Andrückeinheit der Montagevorrichtung gemäß Figur 1.

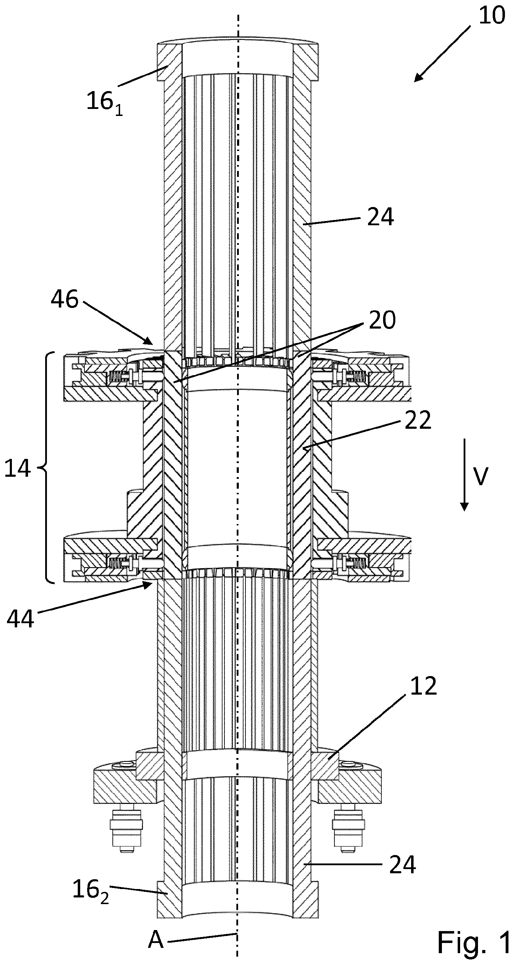

Die Figur 1 zeigt eine mögliche Ausführungsform einer erfindungsgemäßen Montagevorrichtung 10. Bei der leicht perspektivischen Ansicht handelt es sich um einen die Montagevorrichtung 10 halbierenden Längsschnitt entlang eine Axialrichtung A, die vorliegend als zentrale Längsachse eingezeichnet ist. Die Axialrichtung A ist vorliegend vertikal orientiert. Denkbar wäre aber auch eine hiervon abweichende Orientierung. Infolge der vertikal orientierten Axialrichtung A wird in der folgenden Beschreibung Bezug auf relative Angaben wie oben, unten, mittig, oberhalb und unterhalb genommen.

Die Montagevorrichtung 10 umfasst in einem mittleren Bereich eine Bauteilaufnahmeeinheit 12 und oberhalb hiervon eine Ausrichteinheit 14. Die Bauteilaufnahmeeinheit 12 dient der Aufnahme eines Rotorelement und/oder Statorelement, in das Kupferstäbe montiert beziehungsweise eingeführt werden sollen. Die Ausrichteinheit 14 wird zunächst mit mehreren Kupferstäben 20 bestückt, wobei die Kupferstäbe 20 in der Folge in ein Rotorelement und/oder Statorelement, welches in der Bauteilaufnahme 12 gehalten ist, eingeführt werden. Die Ausrichteinheit 14 weist mehrere Aufnahmekanäle 22 auf, in denen die Kupferstäbe 20 gehalten werden. Als Pendant hierzu umfasst das Rotorelement und/oder Statorelement mehrere Aufnahmenuten auf, in die die Kupferstäbe 20 eingeführt werden und in denen die Kupferstäbe 20 ihre endgültige montierte Position finden. Der Vorgang, wie die Ausrichteinheit 14 mit den Kupferstäben 20 bestückt wird, soll an dieser Stelle nicht näher beschrieben werden. Denkbar ist hierfür sowohl ein manueller als auch ein automatisierter Vorgang.

Die Montagevorrichtung 10 umfasst ferner ein erstes und ein zweites Schieberelement 16₁ und 16₂. Jedes Schieberelement 16₁, 16₂ weist in Axialrichtung A verlaufende Druckstäbe 24 auf, die derart dimensioniert sind, dass sie einerseits, nämlich von oben über das erste Schieberelement 16₁, in die Aufnahmekanäle 22 der Ausrichteinheit 14 und andererseits, nämlich von unten über das zweite Schieberelement 16₂, in die Aufnahmenuten des Rotorelements und/oder Statorelements eingeführt werden können. Während das erste Schieberelement 16₁ oberhalb der Ausrichteinheit 14 und mit den Druckstäben 24 in Richtung der Ausrichteinheit 14 zeigend angeordnet ist, ist das zweite Schieberelement 16₂ unterhalb des Bauteilaufnahmeelements 12 und mit den Druckstäben 24 in Richtung des Rotorelements und/oder Statorelements zeigend angeordnet. Die Schieberelemente 16₁, 16₂ können über nicht dargestellte Schlittenanordnungen entlang der Axialrichtung A linear verfahren werden. Hieraus ergibt sich, dass das erste Schieberelement 16₁ die Kupferstäbe 20 über die jeweiligen Druckstäbe 24 von oben kontaktieren kann und das zweite Schieberelement 16₂ die Kupferstäbe 20 über die jeweiligen Druckstäbe 24 von unten kontaktieren kann.

Ein erfindungsgemäßes Verfahren zum gleichzeitigen Einführen in einer Axialrichtung A einer Mehrzahl von Kupferstäben in Aufnahmenute eines Rotorelements und/oder eines Statorelements kann von einem Ausgangszustand der Montagevorrichtung 10 ausgehen, bei dem, verglichen mit der Darstellung der Figur 1, das erste Schieberelement 16₁ nach oben und das zweite Schieberelement 16₂ nach unten verfahren ist. Anschließend verfährt das untere Schieberelement 16₂ die Druckstäbe 24 nach oben in die Aufnahmenuten des Rotorelements und/oder eines Statorelements, so dass die Enden der Druckstäbe 24 sich in einem unteren axialen Endbereich 44 der Ausrichteinheit 14 befinden. In diesem Zustand werden die Aufnahmekanäle 22 der Ausrichteinheit 14 von oben mit Kupferstäben 20 bestückt. Hierbei ist ein Spaltmaß zwischen den Kupferstäben 20 und den Aufnahmekanälen 22 ausreichend groß gewählt, um eine einfaches und schnelles Bestücken beziehungsweise Einführen zu ermöglichen. Das Spaltmaß verhindert ein Verklemmen der Kupferstäbe während dem Bestücken. Die Dimensionierung des Spaltmaßes ist toleranz- und bauteilabhängig. Die Kupferstäbe 20 können bis zu einem Kontakt mit den Druckstäben 24 des unteren Schieberelements 16₂ in die Aufnahmekanäle 22 eingeführt werden. Infolge des bereits positionierten Schieberelements 16₂ fungiert dieses als Gegenhalter und verhindert ein Durchfallen der Kupferstäbe 20 aus den Aufnahmekanälen 22 der Ausrichteinheit 14. In diesem Zustand ist die Ausrichteinheit 22 mit Kupferstäben 20 bestückt, wobei diese gegen ein Durchfallen von dem unteren Schieberelement 16₂ gehalten werden, aber ansonsten infolge des Spaltmaßes zu den Aufnahmekanälen 22 locker einsitzen. In einem nächsten Schritt werden die Kupferstäbe 20 in der Ausrichteinheit 14 auf eine Referenzposition ausgerichtet, wobei dieses Ausrichten und die diesbezüglichen Merkmale der Ausrichteinheit 14 weiter unten beschrieben werden. In einem nächsten Schritt verfährt das obere Schieberelement 16₁ nach unten bis zu einem Kontakt der Druckstäbe 24 mit den Kupferstäben 20. In diesem Zustand haben beide Schieberelemente 16₁, 16₂ ihre Kontaktierungsposition eingenommen. Anschließend verfahren beide Schieberelemente 16₁ und 16₂ synchron und gleichermaßen nach unten in einer Verschieberichtung V, um die Kupferstäbe 20 in die Aufnahmenuten des Rotorelements und/oder eines Statorelements einzuführen. Nach dem Erreichen ihrer jeweils unteren Position, verfahren beide Schiebereinheiten 16₁, 16₂ in ihre zuvor beschriebenen Ausgangspositionen.

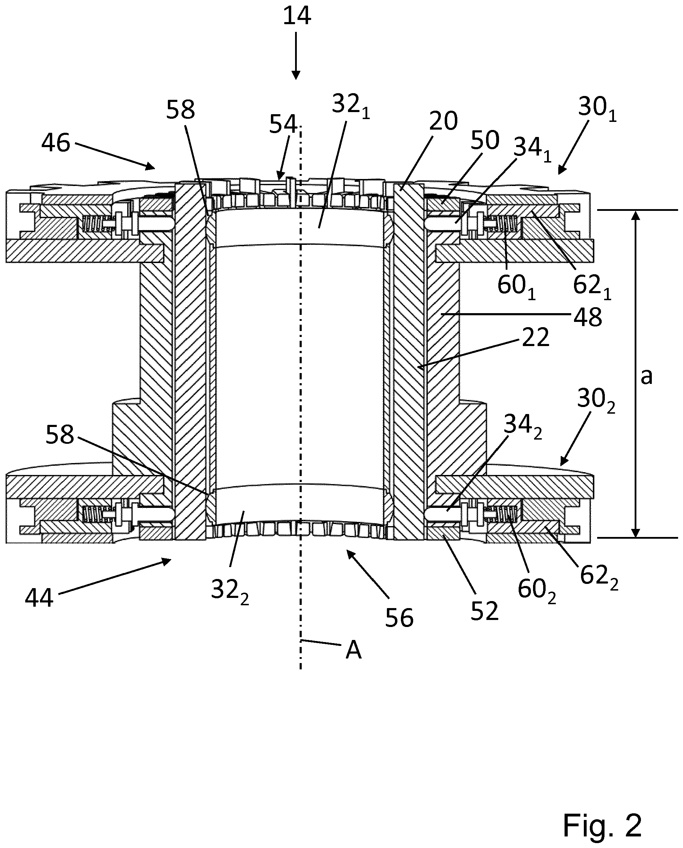

Die Figur 2 zeigt eine detaillierte Darstellung der Ausrichteinheit 14 mit in ihr bestückten Kupferstäben 20. Wie bereits beschrieben, wird die Ausrichteinheit 14 während eines Verfahrens zur Montage von Kupferstäben 20 in einem Rotorelement und/oder Statorelement zunächst mit den Kupferstäben 20 bestückt, anschließend werden die Kupferstäbe 20 in der Ausrichteinheit 14 bezüglich definierten Positionen ausgerichtet und schließlich von der Ausrichteinheit 14 in die Aufnahmenuten des Rotorelements und/oder Statorelements überführt.

Die Ausrichteinheit 14 weist zunächst einen Grundkörper 48 auf, der im wesentlichen zylindrisch ausgebildet ist. In dem Grundkörper 48 verlaufen umfänglich bezüglich der Axialrichtung A die Aufnahmekanäle 22 in Axialrichtung A. Weiterhin umfasst die Ausrichteinheit 14 vorliegend zwei Andrückeinheiten 30₁ und 30₂, die jeweils in dem unteren axialen Endbereich 44 und in einem oberen axialen Endbereich 46 der Ausrichteinheit 14 angeordnet sind. Hierbei können die Andrückeinheiten 30₁, 30₂ von dem Grundkörper 48 gehalten werden. Beide Andrückeinheiten 30₁, 30₂ können umfänglich um den Grundkörper 48 angeordnet sein und in noch näher zu beschreibender Weise mit den Aufnahmekanälen 22 korrespondieren. Die beiden Andrückeinheiten 30₁, 30₂ können in einem axialen Abstand a zueinander angeordnet sein. Dieser axiale Abstand a kann entsprechend den konstruktiven Erfordernissen variiert werden. Denkbar ist auch, dass die beiden Andrückeinheiten 30₁, 30₂ in axialer Richtung näher zueinander an dem Grundkörper 48 angeordnet sind. Auch können drei Andrückeinheiten vorgesehen sein.

Weiterhin umfasst die Ausrichteinheit 14 radial innerhalb und in gleicher Axialposition der Andrückeinheiten 30₁, 30₂ angeordnete Ausrichtringe 32₁ und 32₂. Die Ausrichtringe 32₁, 32₂ dienen den Andrückeinheiten 30₁, 30₂ als Gegenlagerung. Die Ausrichtringe 32₁, 32₂ können von dem Grundkörper 48 gehalten sein. Schließlich umfassen die Ausrichteinheit 14 sowohl in dem unteren axialen Endbereich 44 als auch in dem oberen axialen Endbereich 46 jeweils obere Führungselemente 50 und untere Führungselemente 52. Hierbei können die oberen Führungselemente 50 zu einem Ringelement 54 und die unteren Führungselemente 52 zu einem Ringelement 56 baulich zusammengefasst sein.

Jeder der beiden Andrückeinheiten 30₁, 30₂ umfasst pro Aufnahmekanal 22 ein oberes und ein unteres Stößelelement 34₁ und 34₂, wobei jedes Stößelelement 34₁, 34₂ über ein jeweiliges Federelement 60₁, 60₂ und ein in radialer Richtung verschiebbares Betätigungselement 62₁, 62₂ nach radial innen beaufschlagt werden kann. Vorliegend wird auf eine Beschreibung der Aktuierung der verschiebbaren Betätigungselemente 62₁, 62₂ verzichtet. Über jedes federbeaufschlagte Stößelelement 34₁, 34₂ ist es möglich den jeweiligen Kupferstab 20, der in dem Aufnahmekanal 22 bestückt ist, nach radial innen gegen die Ausrichtringe 32₁, 32₂ zu beaufschlagen beziehungsweise zu positionieren.

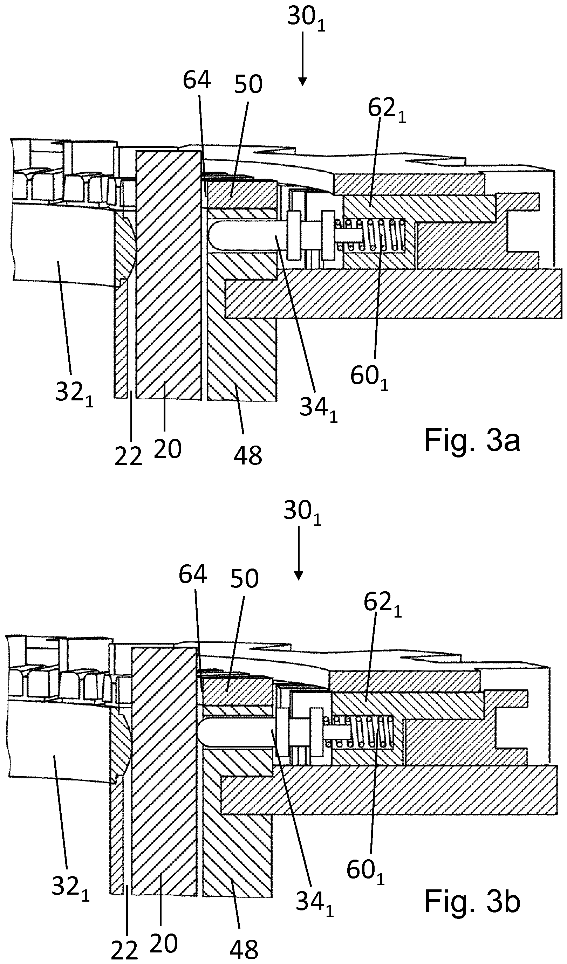

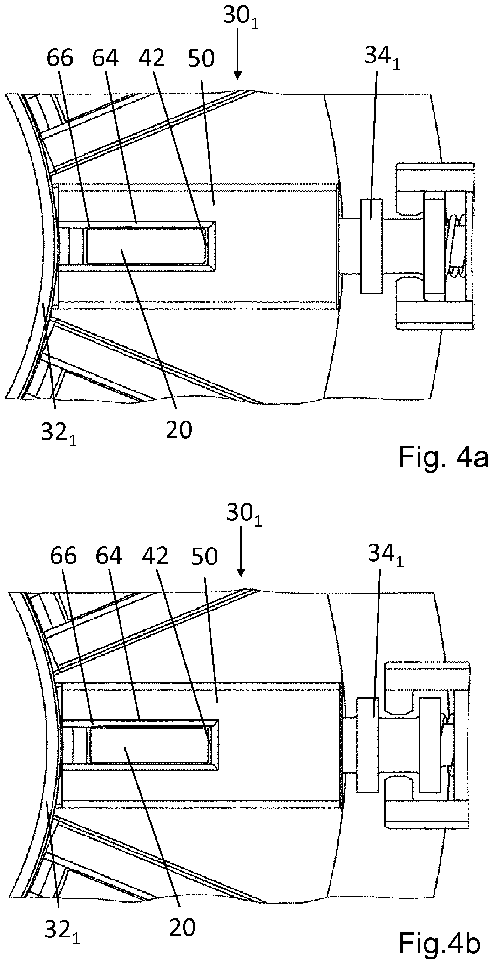

Die Figuren 3a) und 3b) zeigen eine Detailierung einer Andrückeinheit 30₁, 30₂, beispielsweise der in Figur 2 oberen Andrückeinheit 30₁, in zwei verschiedenen Positionen. Grundsätzlich sind alle in der Figur 3 gezeigten Einzelteile der Montagevorrichtung 10 im Rahmen der Figuren 1 und 2 beschrieben worden, so dass auf diese Bezug genommen wird. Figur 3a) zeigt die Andrückeinheit 30₁ in einer Position, in der das federbeaufschlagte Stößelelement 34₁ noch nicht nach radial innen verschoben wurde. In dieser Position sitzen die Kupferstäbe 20, wie zuvor beschrieben, infolge des Spaltmaßes zu den Aufnahmekanälen 22 locker in diesen ein. Figur 3b) zeigt die Andrückeinheit 30₁ in der Zustellposition, in der das federbeaufschlagte Stößelelement 34₁ nach radial innen gegen den Kupferstab 20 verschoben wurde. In der Zustellposition beaufschlagt das federbeaufschlagte Stößelelement 34₁ den Kupferstab 20 gegen den Ausrichtring 32₁, so dass der Kupferstab 20 hierdurch eine definierte radiale Position einnimmt. In diesem Zusammenhang kommt den Führungselementen 50 und 52 auch eine positionierende Funktion zu, die anhand der Figuren 4a) und 4b) beschrieben wird.

Die Figuren 4a) und 4b) zeigen Draufsichten auf Teile der Andrückeinheit 30₁ und auf das Führungselement 50. Die in der Figur 4a) gezeigte Position der Andrückeinheit 30₁ korrespondiert mit der in der Figur 3a) gezeigten Position. Der Kupferstab 20 ist in einen Durchbruch 42 des Führungselements 50 eingeführt. Zu erkennen ist das Spaltmaß, mit dem der Kupferstab 20 in dem Durchbruch 42 des Führungselements 50 einsitzt. Der Durchbruch 42 kann nach radial innen in Richtung der Axialachse A eine sich verjüngende Breite in Umfangsrichtung ausbilden. Diese Verjüngung 64 des Durchbruchs 42 dient einer Zentrierung beziehungsweise einer Positionierung des Kupferstabs 20 in Umfangsrichtung beziehungsweise in tangentialer Richtung in der Zustellposition. Die Zustellposition ist in der Figur 4b) gezeigt und korrespondiert insofern mit der Darstellung der Figur 3b). Insgesamt zeichnet sich die Zustellposition demnach dadurch aus, dass jeder Kupferstab 20 durch die Andrückeinheiten 30₁, 30₂ radial nach innen gegen die beiden Ausrichtringe 32₁, 32₂ beaufschlagt ist und außerdem jeder Kupferstab 20 in den Führungselementen 50 und 54 infolge der sich verjüngenden Durchbrüche 42 in Umfangsrichtung ausgerichtet ist. Infolge einer definierten Federkraft der federbeaufschlagten Stößelelemente 34₁, 34₂ wird ein Verklemmen des Kupferstabes 20 während der Montage verhindert.

Weiterhin ist in den Figuren 2, 3a) und 3b) zu erkennen, dass die Ausrichtringe 32₁, 32₂ eine sich entgegen der Einführrichtung der Kupferstäbe 20 erweiternde Anfasung 58 ausbilden. Gleichermaßen bilden die Führungselemente 50, 52 in Randbereichen der Durchbrüche 42 sich entgegen einer Einführrichtung der Kupferstäbe erweiternde Anfasungen 62 aus, wie dies insbesondere in den Figuren 3 und 4 zu erkennen ist.

### Bezugszeichenliste

- 10: Montagevorrichtung
- 12: Bauteilaufnahmeelement
- 14: Ausrichteinheit
- 16: Schieberelement
- 20: Kupferstab
- 22: Aufnahmekanal
- 24: Druckstab
- 30: Andrückeinheit
- 32: Ausrichtring
- 34: Stößelelement
- 42: Durchbruch
- 44: axialer Endbereich
- 46: axialer Endbereich
- 48: Grundkörper
- 50: Führungselement
- 52: Führungselement
- 54: Ringelement
- 56: Ringelement
- 58: Anfasung
- 60: Federelement
- 62: Betätigungselement
- 64: Anfasung
- 66: Verjüngung
- V: Verschieberichtung
- A: Axialrichtung

## Patentansprüche

1. Montagevorrichtung (10) zum gleichzeitigen Einführen in einer Axialrichtung A einer Mehrzahl an Kupferstäben (20) in Aufnahmenuten eines Rotorelements und/oder eines Statorelements einer elektrischen Maschine, umfassend
ein Bauteilaufnahmeelement (12) zur Aufnahme des Rotorelements und/oder des Statorelements,
eine Ausrichteinheit (14) zur Aufnahme der in das Rotorelement und/oder das Statorelement einzuführenden Kupferstäbe (20) und zum Ausrichten der einzuführenden Kupferstäbe (20) bezüglich des Rotorelements und/oder des Statorelements und
zwei in der Axialrichtung A verfahrbare Schieberelemente (16₁, 16₂), über die die Kupferstäbe an entgegengesetzten axialen Enden kontaktierbar sind, um die Kupferstäbe (20) gleichzeitig über die an den entgegengesetzten axiale Enden kontaktierenden Schieberelemente (16₁, 16₂) von der Ausrichteinheit (14) in die Aufnahmenuten des Rotorelements und/oder des Statorelements einzuführen.

2. Montagevorrichtung (10) nach Anspruch 1, **dadurch gekennzeichnet, dass** die Ausrichteinheit (14) eine Mehrzahl Aufnahmekanäle (22) aufweist, zur jeweiligen Aufnahme von in die Aufnahmenute des Rotorelements und/oder des Statorelements einzuführenden Kupferstäben (20).

3. Montagevorrichtung (10) nach Anspruch 1 oder 2, **dadurch gekennzeichnet, dass** das Bauteilaufnahmeelement (12) schwimmend gelagert ist.

4. Montagevorrichtung (10) nach einem der Ansprüche 1 bis 3, **dadurch gekennzeichnet, dass** die Ausrichteinheit (14) zumindest zwei in jeweiligen Zustellpositionen auf die Kupferstäbe (20) radial bezüglich der Axialrichtung A wirkende Andrückeinheiten (30₁, 30₂) aufweist.

5. Montagevorrichtung (10) nach Anspruch 4, **dadurch gekennzeichnet, dass** die zwei Andrückeinheiten (30₁, 30₂) in einem axialen Abstand a zueinander angeordnet sind.

6. Montagevorrichtung (10) nach Anspruch 5, **dadurch gekennzeichnet, dass** die Ausrichteinheit eine der Anzahl der Andrückeinheiten (30₁, 30₂) entsprechende Anzahl an Ausrichtringen (32₁, 32₂) aufweist, gegen die die Andrückeinheiten (30₁, 30₂) in ihrer jeweiligen Zustellposition die Kupferstäbe (20) radial bezüglich der Axialrichtung A beaufschlagen.

7. Montagevorrichtung (10) nach Anspruch 6, **dadurch gekennzeichnet, dass** die Ausrichtringe (32₁, 32₂) eine sich entgegen einer Einführrichtung der Kupferstäbe (20) erweiternde Anfasung (58) ausbilden.

8. Montagevorrichtung (10) nach einem der Anspruch 4 bis 7, **dadurch gekennzeichnet, dass** die Andrückeinheiten (30₁, 30₂) jeweils über federkraftbeaufschlagte Stößelelemente (34) die Kupferstäbe (20) beaufschlagen.

9. Montagevorrichtung (10) nach einem der Ansprüche 1 bis 8, **dadurch gekennzeichnet, dass** die Ausrichteinheit (14) an axialen Endbereichen (44, 46) eine der Anzahl der Kupferstäbe (20) entsprechende Anzahl Führungselemente (50, 52) aufweist, wobei die Führungselemente (50, 52) Durchbrüche (42) zum Einführen der Kupferstäbe (14) in die Ausrichteinheit (14) aufweisen.

10. Montagevorrichtung (10) nach Anspruch 9, **dadurch gekennzeichnet, dass** Randbereiche der Durchbrüche (42) sich entgegen einer Einführrichtung der Kupferstäbe (20) erweiternde Anfasungen (64) ausbilden.

11. Montagevorrichtung (10) nach Anspruch 9 oder 10, **dadurch gekennzeichnet, dass** die Führungselemente (50, 52) in jedem axialen Endbereich (44, 46) der Ausrichteinheit (14) zu jeweils einem Ringelement (54, 56) verbunden sind.

12. Montagevorrichtung (10) nach einem der Ansprüche 1 bis 11, **dadurch gekennzeichnet, dass** die Schieberelemente (16₁, 16₂) eine der Anzahl der Kupferstäbe (20) entsprechende Anzahl in Axialrichtung A ausgerichtete Druckstäbe (24) aufweisen und die entgegengesetzten Enden der Kupferstäbe (20) über die Druckstäbe (24) kontaktierbar sind.

13. Montagevorrichtung (10) nach Anspruch 12, **dadurch gekennzeichnet, dass** die Druckstäbe (24) eines der Schieberelemente (16₁, 16₂) in Axialrichtung A entgegen einer Federbeaufschlagung verschiebbar sind.

14. Verfahren zum gleichzeitigen Einführen in einer Axialrichtung A einer Mehrzahl von Kupferstäben (20) in Aufnahmenute eines Rotorelements und/oder eines Statorelements einer elektrischen Maschine unter Anwendung einer Montagevorrichtung (10) nach einem der Ansprüche 1 bis 13, mit den Schritten:
- Bereitstellen einer Mehrzahl an Kupferstäben (20),
- Verfahren des zweiten der zwei Schieberelemente (16₁, 16₂) in eine Kontaktierungsposition, in der das zweite Schieberelement (16₂) durch zumindest einen Teil der Aufnahmenute bis in einen axialen Endbereich (44) der Ausrichteinheit (14) reichend hindurchgeführt ist,
- Bestücken der Ausrichteinheit (14) mit den Kupferstäben (20),
- Ausrichten der Kupferstäbe (20) in der Ausrichteinheit (14) auf einen gemeinsamen Radius bezogen auf die Axialrichtung A,
- Verfahren des ersten Schieberelements (16₁) in eine Kontaktierungsposition, in der das erste Schieberelement (16₁) die von dem zweiten Schieberelement (16₂) abgewandten jeweiligen axialen Enden der Kupferstäbe (20) kontaktiert,
- synchrones und gleichgerichtetes Verfahren des ersten und des zweiten Schieberelements (16₁, 16₂) in einer von der Ausrichteinheit (14) zu dem Bauteilaufnahmeelement (12) gerichteten Verschieberichtung V.

## Claims

1. Assembly device (10) for simultaneously inserting a plurality of copper bars (20) into receiving grooves of a rotor element and/or of a stator element of an electric machine in an axial direction A, comprising a component receiving element (12) for receiving the rotor element and/or the stator element,
an aligning unit (14) for receiving the copper bars (20) to be inserted into the rotor element and/or the stator element and for aligning the copper bars (20) to be inserted with respect to the rotor element and/or the stator element and
two pusher elements (16₁, 16₂), which can be moved in the axial direction A and by way of which the copper bars can be contacted at opposite axial ends in order to simultaneously insert the copper bars (20) from the aligning unit (14) into the receiving grooves of the rotor element and/or the stator element by way of the pusher elements (16₁, 16₂) making contact at the opposite axial ends.

2. Assembly device (10) according to Claim 1, **characterized in that** the aligning unit (14) has a plurality of receiving channels (22), for respectively receiving copper bars (20) to be inserted into the receiving groove of the rotor element and/or the stator element.

3. Assembly device (10) according to Claim 1 or 2, **characterized in that** the component receiving element (12) is mounted in a floating manner.

4. Assembly device (10) according to one of Claims 1 to 3, **characterized in that** the aligning unit (14) has at least two pressure-exerting units (30₁, 30₂), which in respective infeeding positions acting on the copper bars (20) radially with respect to the axial direction A.

5. Assembly device (10) according to Claim 4, **characterized in that** the two pressure-exerting units (30₁, 30₂) are arranged at an axial distance a from one another.

6. Assembly device (10) according to Claim 5, **characterized in that** the aligning unit has a number of aligning rings (32₁, 32₂), which correspond in number to the number of pressure-exerting units (30₁, 30₂) and against which the pressure-exerting units (30₁, 30₂) in their respective infeeding position press the copper bars (20) radially with respect to the axial direction A.

7. Assembly device (10) according to Claim 6, **characterized in that** the aligning rings (32₁, 32₂) form a bevel (58) widening counter to a direction of insertion of the copper bars (20).

8. Assembly device (10) according to one of Claims 4 to 7, **characterized in that** the pressure-exerting units (30₁, 30₂) press the copper bars (20) in each case by way of spring-loaded pushrod elements (34).

9. Assembly device (10) according to one of Claims 1 to 8, **characterized in that** the aligning unit (14) has at axial end regions (44, 46) a number of guiding elements (50, 52), which correspond in number to the number of copper bars (20), the guiding elements (50, 52) having apertures (42) for inserting the copper bars (14) into the aligning unit (14).

10. Assembly device (10) according to Claim 9, **characterized in that** peripheral regions of the apertures (42) form bevels (64) widening counter to a direction of insertion of the copper bars (20).

11. Assembly device (10) according to Claim 9 or 10, **characterized in that** the guiding elements (50, 52) are connected in each axial end region (44, 46) of the aligning unit (14) respectively to a ring element (54, 56).

12. Assembly device (10) according to one of Claims 1 to 11, **characterized in that** the pusher elements (16₁, 16₂) have a number of thrust rods (24), which correspond in number to the number of copper bars (20) and are aligned in the axial direction A, and the opposite ends of the copper bars (20) can be contacted by way of the thrust rods (24).

13. Assembly device (10) according to Claim 12, **characterized in that** the thrust rods (24) of one of the pusher elements (16₁, 16₂) are displaceable in the axial direction A against a spring loading.

14. Method for simultaneously inserting a plurality of copper bars (20) into receiving grooves of a rotor element and/or a stator element of an electric machine in an axial direction A using an assembly device (10) according to one of Claims 1 to 13, with the steps of:
- providing a plurality of copper bars (20),
- moving the second of the two pusher elements (16₁, 16₂) into a contacting position, in which the second pusher element (16₂) is led through at least part of the receiving groove, reaching into an axial end region (44) of the aligning unit (14),
- loading the aligning unit (14) with the copper bars (20),
- aligning the copper bars (20) in the aligning unit (14) to have a common radius with respect to the axial direction A,
- moving the first pusher element (16₁) into a contacting position, in which the first pusher element (16₁) contacts the respective axial ends of the copper bars (20) that are facing away from the second pusher element (16₂),
- moving the first and second pusher elements (16₁, 16₂) synchronously and in the same direction, in a displacing direction V directed from the aligning unit (14) to the component receiving element (12).

## Revendications

1. Dispositif de montage (10) destiné à insérer simultanément dans une direction axiale A une pluralité de barres de cuivre (20) dans des rainures de réception d'un élément de rotor et/ou d'un élément de stator d'une machine électrique, ledit dispositif de montage comprenant
un élément de réception de composant (12) destiné à recevoir l'élément rotor et/ou l'élément stator,
une unité d'orientation (14) destinée à recevoir les barres de cuivre (20) à insérer dans l'élément de rotor et/ou l'élément de stator et à orienter les barres de cuivre (20) à insérer par rapport à l'élément de rotor et/ou l'élément de stator et
deux éléments coulissants (16₁, 16₂) mobiles dans la direction axiale A et permettant de mettre les barres de cuivre en contact avec les extrémités axiales opposées afin d'insérer les barres de cuivre (20) simultanément, par le biais des éléments coulissants (16₁, 16₂) venant en contact avec les extrémités axiales opposées, de l'unité d'orientation (14) jusque dans les rainures de réception de l'élément de rotor et/ou de l'élément de stator.

2. Dispositif de montage (10) selon la revendication 1, **caractérisé en ce que** l'unité d'orientation (14) comporte une pluralité de canaux de réception (22) destinés à recevoir chacun une barre de cuivre (20) à insérer dans la rainure de réception de l'élément de rotor et/ou de l'élément de stator.

3. Dispositif de montage (10) selon la revendication 1 ou 2, **caractérisé en ce que** l'élément de réception de composant (12) est monté de façon flottante.

4. Dispositif de montage (10) selon l'une des revendications 1 à 3, **caractérisé en ce que** l'unité d'orientation (14) comporte au moins deux unités de pressage (30₁, 30₂) agissant sur les barres de cuivre (20) dans les positions de réglage respectives radialement par rapport à la direction axiale A.

5. Dispositif de montage (10) selon la revendication 4, **caractérisé en ce que** les deux unités de pressage (30₁, 30₂) sont disposées à distance axiale a l'une de l'autre.

6. Dispositif de montage (10) selon la revendication 5, **caractérisé en ce que** l'unité d'orientation comporte un nombre de bagues d'orientation (32₁, 32₂), correspondant au nombre d'unités d'orientation (30₁, 30₂), contre lesquelles les unités de pressage (30₁, 30₂) appliquent dans leur position de réglage respective les barres de cuivre (20) radialement par rapport à la direction axiale A.

7. Dispositif de montage (10) selon la revendication 6, **caractérisé en ce que** les bagues d'orientation (32₁, 32₂) forment un chanfrein (58) s'élargissant dans le sens opposé à un sens d'insertion des barres de cuivre (20) .

8. Dispositif de montage (10) selon l'une des revendications 4 à 7, **caractérisé en ce que** les unités de pressage (30₁, 30₂) agissent respectivement sur les barres de cuivre (20) par le biais d'éléments de percussion élastiques (34).

9. Dispositif de montage (10) selon l'une des revendications 1 à 8, **caractérisé en ce que** l'unité d'orientation (14) comporte au niveau de zones d'extrémité axiales (44, 46) un nombre d'éléments de guidage (50, 52), correspondant au nombre de barres de cuivre (20), les éléments de guidage (50, 52) comportant des passages (42) destinés à l'insertion des barres de cuivre (14) dans l'unité d'orientation (14).

10. Dispositif de montage (10) selon la revendication 9, **caractérisé en ce que** des zones de bord des passages (42) forment des chanfreins (64) s'élargissant dans le sens opposé au sens d'insertion des barres de cuivre (20) .

11. Dispositif de montage (10) selon la revendication 9 ou 10, **caractérisé en ce que** les éléments de guidage (50, 52) sont reliés chacun à un élément annulaire (54, 56) dans chaque zone d'extrémité axiale (44, 46) de l'unité d'orientation (14).

12. Dispositif de montage (10) selon l'une des revendications 1 à 11, **caractérisé en ce que** les éléments coulissants (16₁, 16₂) comportent un nombre de barres de pression (24), correspondant au nombre de barres de cuivre (20), qui sont orientées dans la direction axiale A et peuvent venir en contact avec les extrémités opposées des barres de cuivre (20) par le biais des barres de pression (24).

13. Dispositif de montage (10) selon la revendication 12, **caractérisé en ce que** les barres de pression (24) de l'un des éléments coulissants (16₁, 16₂) peuvent coulisser dans la direction axiale A en s'opposant au ressort.

14. Procédé d'insertion simultanée dans une direction axiale A d'une pluralité de barres de cuivre (20) dans des rainures de réception d'un élément de rotor et/ou d'un élément de stator d'une machine électrique à l'aide d'un dispositif de montage (10) selon l'une des revendications 1 à 13, ledit procédé comprenant les étapes suivantes :
- fournir une pluralité de barres de cuivre (20),
- déplacer le deuxième des deux éléments coulissants (16₁, 16₂) dans une position de contact dans laquelle le deuxième élément coulissant (16₂) est guidé à travers au moins une partie des rainures de réception de façon à parvenir dans une zone d'extrémité axiale (44) de l'unité d'orientation (14),
- équiper l'unité d'orientation (14) des barres de cuivre (20),
- orienter les barres de cuivre (20) dans l'unité d'orientation (14) sur un rayon commun par rapport à la direction axiale A,
- déplacer le premier élément coulissant (16₁) dans une position de contact dans laquelle le premier élément coulissant (16₁) vient en contact avec les extrémités axiales respectives des barres de cuivre (20) qui sont opposées au deuxième élément coulissant (16₂),
- déplacer de manière synchrone et dans le même sens le premier et le deuxième élément coulissant (16₁, 16₂) dans un sens de coulissement V dirigé de l'unité d'orientation (14) vers l'élément de réception de composant (12).
